# EUROPEAN PATENT APPLICATION

(11) **EP 4 513 049 A1**
(43) Date of publication of application: **26.02.2025**
(21) Application number: 24192690.6
(22) Date of filing: 02.08.2024
(51) Int. Cl.: F16D 11/14, F16D 23/14

(54) **DISCONNECTION MECHANISM, POWER TRANSMISSION SYSTEM FOR VEHICLE, AND VEHICLE**

(30) Priority: 21.08.2023 CN 202311057877
(71) Applicant: VALEO EMBRAYAGES, 80009 Amiens (FR)
(72) Inventor: GU, Yifan, 80000 Amiens (FR); JIN, Yejin, 80000 Amiens (FR); WANG, Xiaoling, 80000 Amiens (FR); HAO, Ying, 80000 Amiens (FR); WANG, Chris-Dongdong, 80000 Amiens (FR); CHEN, Xucan, 80000 Amiens (FR)
(74) Representative: Valeo Powertrain Systems

(57) **Abstract**

The present invention relates to a disconnection mechanism (10), for engaging or disengaging a fixed component and a movable component arranged on a first shaft extending in a first direction, wherein the disconnection mechanism comprises: a shift fork (12), connected to the movable component, and constructed to be able to reciprocate linearly in the first direction, so that the movable component is engaged with or disengaged from the fixed component; an actuator (13), comprising an output end, the output end rotating about a rotation axis of the actuator at a distance from the rotation axis; and a drive rod (14), having a first end rotatably connected to the output end and a second end rotatably connected to the shift fork, so that the output end, when rotating, is able to drive the shift fork to reciprocate linearly.

## Description

### TECHNICAL FIELD

The present invention relates to a disconnection mechanism, a power transmission system for a vehicle, and a vehicle.

### BACKGROUND

The trend of designing and manufacturing fuel-efficient, low-emission vehicles has grown considerably. This trend is the inevitable result of concern for the environment and increased fuel costs. At the forefront of this trend is the development of electric vehicles, such as pure electric vehicles, hybrid vehicles, plug-in hybrid vehicles, range extended electric vehicles and fuel cell vehicles.

Four-wheel drive electric vehicles are equipped with electric motors atboth the front and the rear, and these are usually classed as a main drive motor and an auxiliary drive motor; in some situations, the auxiliary drive motor may be in a non-operational state. For example, the auxiliary drive motor is only brought into use during acceleration or in special operating conditions, or when the driver requires certain high-performance modes. However, when the auxiliary drive motor stops running, the wheels will still drive an auxiliary drive differential to operate, and this differential will drive all transmission mechanisms connected thereto as well as the electric motor to rotate together, thus causing drag loss. To improve efficiency, a disconnection mechanism is added to a power transmission system of the electric vehicle, thereby reducing drag loss.

A conventional disconnection mechanism generally uses a lead screw; when the electric motor rotates, rotational motion is converted to linear motion by means of a ball screw, thereby driving a shift fork to push a movable component of a clutch, so as to realize the functions of engagement and disconnection.

### SUMMARY OF THE INVENTION

The technical problem to be solved by the present invention is to provide a disconnection mechanism which is cheaper and more efficient than the prior art.

This technical problem is solved by the following technical solution.

In one exemplary aspect, the present invention provides a disconnection mechanism, for engaging or disengaging a fixed component and a movable component arranged on a first shaft extending in a first direction, wherein the disconnection mechanism comprises:
a shift fork, connected to the movable component, the shift fork being constructed to be able to reciprocate linearly in the first direction, so that the movable component is engaged with or disengaged from the fixed component;
an actuator, comprising an output end, the output end rotating about a rotation axis of the actuator at a distance from the rotation axis; and
a drive rod, having a first end rotatably connected to the output end and a second end rotatably connected to the shift fork, so that the output end, when rotating, is able to drive the shift fork to reciprocate linearly.

The present invention is based on the following concept: as a result of providing an eccentric actuator output end, i.e. one which is not located on the rotation axis of the actuator but instead is configured to rotate about the rotation axis at a distance from the rotation axis, and providing a connecting rod or drive rod connecting the eccentric actuator output end to the shift fork, axial linear reciprocation of the shift fork can be realized simply at a low cost by rotational motion of the actuator output end.

It should be explained that in the disconnection mechanism according to the present invention, the axial direction of the actuator output end is configured to be a second direction perpendicular to the first direction, and the output end is offset relative to the shift fork in a third direction orthogonal to the first and second directions, and the drive rod can thus be installed between the actuator output end and the shift fork.

Compared with a conventional solution, the disconnection mechanism of the present invention is more space-saving, has a lower cost, and has a faster operational response. Since the disconnection mechanism of the present invention is, overall, arranged at a side of the first shaft, it will not increase the axial length of the power transmission system in the first direction; consequently, compared with a conventional solution using a ball screw to push a shift fork, the power transmission system takes up less space in the first direction, so freedom of design is increased. Furthermore, the drive rod used in the present invention is a machined member, which has a lower cost than a ball screw. Moreover, in the present invention, an actuator motor need only rotate through a very small angle in order to realize linear movement of the shift fork, so the disconnection mechanism of the present invention ha a fast operational response.

In an exemplary embodiment, the output end comprises an output shaft, and the first end of the drive rod comprises an opening fitted round the output shaft.

In an exemplary embodiment, the drive rod is bent to axially offset the shift fork from the actuator.

In an exemplary embodiment, the drive rod and the output end form a crank connecting rod system.

In an exemplary embodiment, the disconnection mechanism comprises a shift fork rod extending in the first direction, and the shift fork is supported on a fixed structure by means of the shift fork rod.

In an exemplary embodiment, the shift fork has a sleeve part fitted round the shift fork rod and a drive rod mounting part extending outwards from the sleeve part, the drive rod mounting part being rotatably connected to the second end of the drive rod.

In an exemplary embodiment, the drive rod mounting part comprises at least one arm, which is rotatably connected to the second end of the drive rod by means of a mounting member. In an exemplary embodiment, the drive rod mounting part comprises two arms, so as to accommodate the second end of the drive rod between the two arms. In an exemplary embodiment, the mounting member is a pin.

In an exemplary embodiment, the second end of the drive rod is provided with a ball joint, and the drive rod mounting part comprises a recess for receiving the ball joint.

In an exemplary embodiment, the second end of the drive rod is aligned with the axis of the shift fork rod.

In an exemplary embodiment, the shift fork is fixedly connected to the shift fork rod by means of the sleeve part, and the shift fork rod is supported on the fixed structure in such a way as to be slideable in the first direction.

In an exemplary embodiment, the shift fork is supported on the shift fork rod in such a way as to be slideable in the first direction by means of the sleeve part, and the shift fork rod is fixedly connected to the fixed structure.

In an exemplary embodiment, a bush is provided between the sleeve part of the shift fork and the shift fork rod.

In an exemplary embodiment, the disconnection mechanism is arranged in a housing, and the fixed structure is part of the housing or a component fixed to the housing.

In an exemplary embodiment, the disconnection mechanism further comprises a first position sensor for judging whether the output end has rotated into position, and/or a second position sensor for judging whether the shift fork has moved into position, wherein the first position sensor is arranged inside the actuator.

According to another aspect of the present invention, a power transmission system for a vehicle is provided, comprising: a speed reducer, having at least one transmission shaft which receives torque from a driving mechanism; a tooth clutch, comprising a fixed component and a movable component arranged on a first shaft, the first shaft being at least one transmission shaft; and the disconnection mechanism described above, the disconnection mechanism causing the movable component and the fixed component to be engaged or disengaged, to receive or disconnect torque transmission of the driving mechanism and the speed reducer.

According to another aspect of the present invention, a power transmission system for a vehicle is provided, comprising: a twin speed reducer, having at least one transmission shaft which receives torque from a driving mechanism; a tooth clutch, comprising two fixed components and a movable component arranged on a first shaft, the first shaft being at least one transmission shaft and the movable component is axially movable between the two fixed components; and the disconnection mechanism described above, the disconnection mechanism causing the movable component and the two fixed components to be engaged or disengaged separately, to receive or disconnect torque transmission of the driving mechanism and the twin speed reducer.

In an exemplary embodiment, the fixed component is an engagement gear which is fixed to a driven gear of the transmission shaft. For example, the driven gear is an idler gear.

In an exemplary embodiment, the movable component is a gear sleeve comprising internal teeth able to connect with external teeth of the engagement gear.

According to another aspect of the present invention, a vehicle is provided, comprising the power transmission system described above.

These and other features, aspects and advantages of the present application will become easier to understand with reference to the following description. The accompanying drawings incorporated in this specification and constituting a part thereof illustrate embodiments of the present application, and are used to explain the principles of the present application together with the description.

### BRIEF DESCRIPTION OF THE DRAWINGS

The accompanying drawings are incorporated into and constitute a part of the specification. The accompanying drawings, together with the general description above and the detailed description of exemplary embodiments and methods given below, are used to explain the principles of the present invention. The objects and advantages of the present invention will become apparent when studying the following description according to the accompanying drawings, in which identical elements are given identical or similar reference signs, and in which:
Fig. 1 shows a partial sectional drawing of an exemplary embodiment of a power transmission system for a vehicle according to the present invention.
Fig. 2 shows a sectional drawing of some of the components in Fig. 1.
Fig. 3A shows a 3D schematic drawing of some of the components in Fig. 2.
Fig. 3B shows an exploded drawing of components related to the clutch.
Fig. 4A shows a 3D schematic drawing of the disconnection mechanism according to the present invention.
Fig. 4B shows another 3D schematic drawing of the disconnection mechanism according to the present invention.
Fig. 5A is a 3D schematic drawing showing how the disconnection mechanism of the present invention and the various components of the power transmission system are related to one another when assembled.
Fig. 5B is another 3D schematic drawing showing how the disconnection mechanism of the present invention and the various components of the power transmission system are related to one another when assembled.
Fig. 6A shows schematically another application scenario of the disconnection mechanism according to the present invention.
Fig. 6B shows schematically another application scenario of the disconnection mechanism according to the present invention.
Fig. 7A shows schematically the connection relationships between the drive rod and the actuator, and between the drive rod and the shift fork.
Fig. 7B shows schematically starting positions and end positions of the drive rod in Fig. 7A in an operational state.
Fig. 8 shows a 3D schematic drawing of a second embodiment of a power transmission system for a vehicle according to the present invention.
Fig. 9 shows schematically the connection relationships between the drive rod and the actuator, and between the drive rod and the shift fork according to the second embodiment of the present invention.

### DETAILED DESCRIPTION

Reference will now be made in detail to exemplary embodiments and methods of the present invention shown in the accompanying drawings, in which identical reference signs designate identical or corresponding components. However, it should be noted that the present invention in its broader aspects is not limited to specific details, representative devices and methods, and illustrative examples shown and described in connection with the exemplary embodiments and methods.

Unless otherwise defined, the technical or scientific terms used herein shall have the common meanings understood by those of ordinary skill in the field to which the present disclosure pertains. The words "first", "second", and the like used in the description and claims of the patent application disclosed herein do not indicate any order, quantity or importance, being merely used to distinguish different component parts. When the number of components is not specified, the number of components may be one or multiple. Similarly, the words "one", "the", "said" and the like do not necessarily indicate a quantity limitation. The words "comprise", "include" and the like mean that an element or object appearing before the word encompasses elements or objects listed after the word and their equivalents, without excluding other elements or objects. "Upper", "lower", "left", "right", etc. are only intended to indicate the relative orientation relationship when a device is used or the orientation relationship shown in the accompanying drawings. When the absolute position of the described object changes, the relative positional relationship may also change accordingly. Unless otherwise explicitly described, the terms "connecting", "connected" and the like refer to a relationship in which the structures are fixed or attached to each other directly or indirectly through an intermediate structure.

Now refer to the accompanying drawings, in which identical numerals represent identical elements in all of the accompanying drawings.

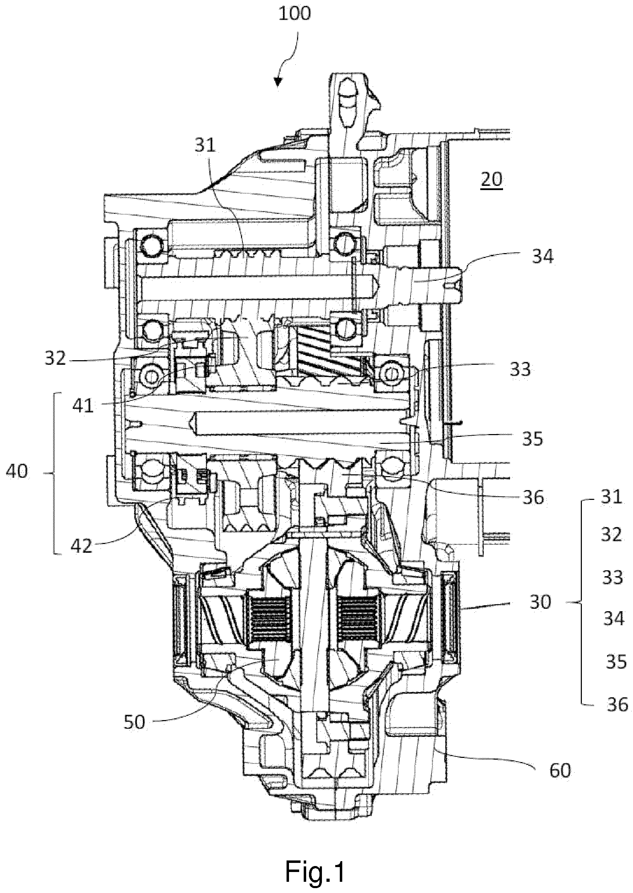

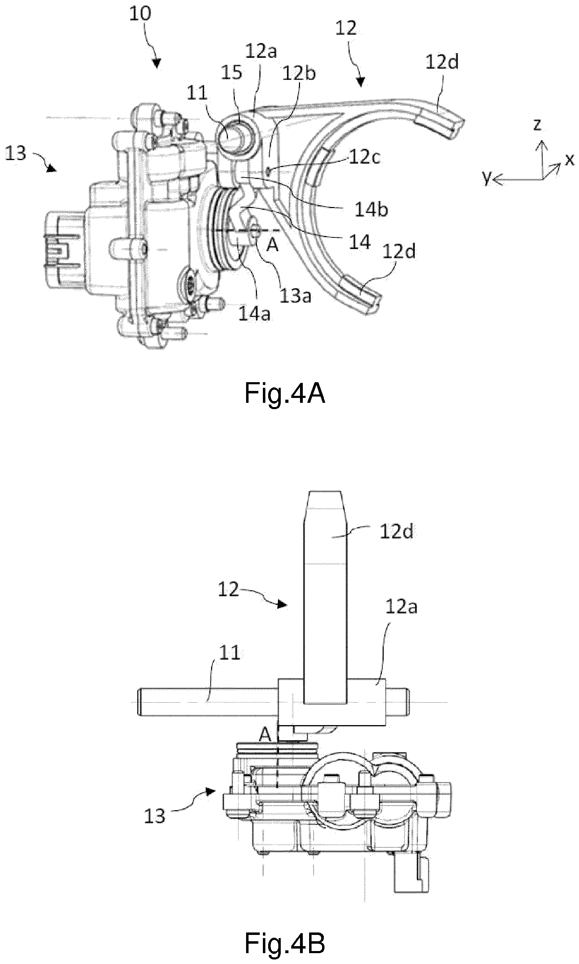

Fig. 1 shows a partial sectional drawing of an exemplary embodiment of a power transmission system 100 for a vehicle according to the present invention. The power transmission system 100 comprises:
- a speed reducer 30, having at least one transmission shaft, for example a speed reducer input shaft 34 and an intermediate shaft 35;
- a clutch 40, comprising a fixed component and a movable component arranged on a first shaft, wherein the first shaft comprises the at least one transmission shaft, the fixed component is for example an engagement gear 41, and the movable component is for example a gear sleeve 42; and
- a disconnection mechanism 10 (see Fig. 4), for engaging or disengaging the movable component and the fixed component.

It should be understood that the power transmission system is an apparatus which is driven to operate by means of electric power. As an example, an electric motor, as a driving mechanism, can convert inputted electrical energy to rotational mechanical energy; the speed reducer is mechanically coupled to the electric motor, adjusts the speed of rotation and the torque generated by the electric motor, and then transmits same to wheels of the vehicle.

In the embodiment shown, the electric motor 20 is a synchronous electric motor with a permanent magnet. The electric motor 20 comprises a drive shaft (not shown in the figures), which is driven by electric power produced by the electromagnetic effect of a rotor and stator in the electric motor 20. The electric motor may also be an asynchronous electric motor. Embodiments of the present disclosure are not limited with regard to the specific type of the electric motor.

The speed reducer 30 is coupled to the electric motor 20. The speed reducer 30 can convert high speed and low torque of the electric motor to low speed and high torque. The speed reducer 30 may have an input shaft 34, which may be connected to and arranged coaxially with the drive shaft of the electric motor, so as to receive torque from the electric motor. For example, the input shaft of the speed reducer may be rotationally fixed to the drive shaft of the electric motor. It should be understood that the drive shaft of the electric motor and the input shaft of the speed reducer may be two different shafts rotationally connected by a connecting element (e.g. by splines), or may be the same shaft; no restriction is imposed here.

The speed reducer 30 may further comprise multiple stages of speed-reducing gears, which are connected to the electric motor 20 and a differential 50 and have different speeds, so as to increase torque through speed reduction; these include, for example, an input gear 31 driven by the drive shaft of the electric motor or the input shaft of the speed reducer. The speed reducer 30 may for example further comprise the intermediate shaft 35, which may be connected to the input gear 31 and another driven gear 36 connected to the differential 50, so that a speed-reduced driving force is distributed between different wheels by the differential 50.

The input gear 31 may be integrally formed on the speed reducer input shaft 34 and arranged coaxially with the speed reducer input shaft 34. For example, the input gear 31 may be forged integrally with the speed reducer input shaft 34, and have a toothed surface machined thereon.

An intermediate first gear 32 and an intermediate second gear 33 are provided on the intermediate shaft 35 sequentially. The intermediate shaft 35 is arranged in parallel with the speed reducer input shaft 34. The intermediate shaft 35 may be a hollow shaft. The intermediate first gear 32 is transmission-meshed with the input gear 31. The intermediate second gear 33 may be transmission-meshed with the driven gear 36 connected to the differential 50.

A two-stage helical gear parallel-shaft speed reducer arrangement between the speed reducer input shaft 34 and the differential 50 is thus realized demonstratively. Primary speed reduction gears comprise the input gear 31 connected to the speed reducer input shaft 34 and the intermediate first gear 32 connected to the intermediate shaft 35. Secondary speed reduction gears comprise the intermediate second gear 33 connected to the intermediate shaft 35 and the driven gear 36 connected to the differential 50.

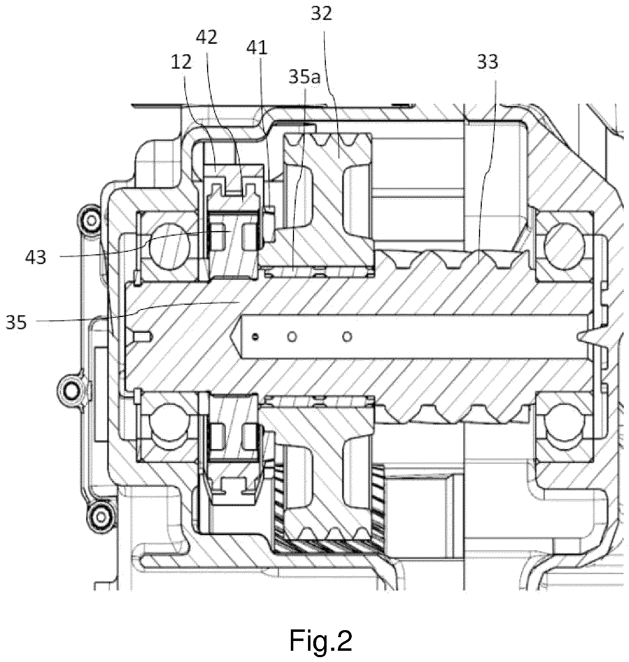

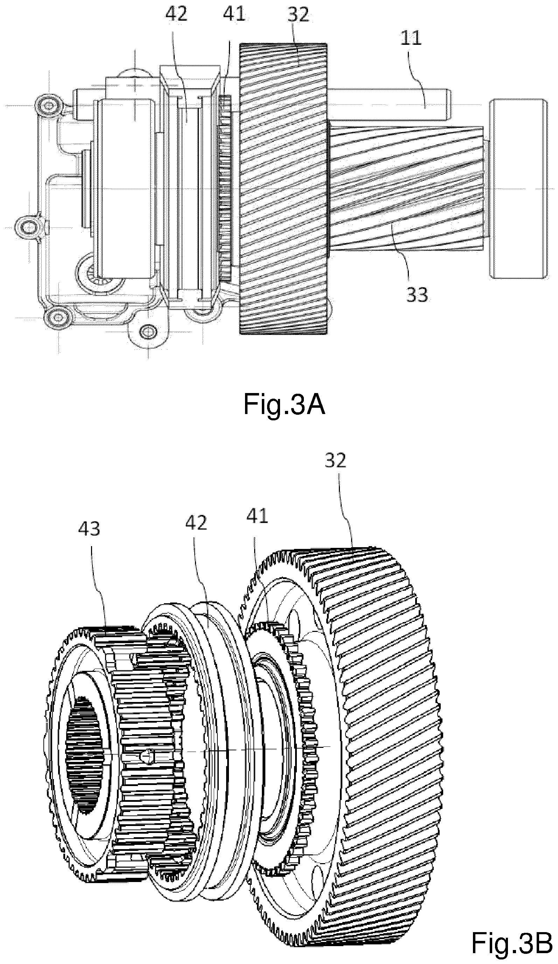

Fig. 2 shows a sectional drawing of some of the components in Fig. 1, clearly showing the clutch 40. Fig. 3A shows a 3D schematic drawing of some of the components in Fig. 2. Fig. 3B shows an exploded drawing of components related to the clutch.

The clutch 40 may be arranged on the speed reducer input shaft 34 or the intermediate shaft 35, and is used to providing interruptible transmission of driving force or torque between the electric motor 20 and the differential 50. In this exemplary embodiment, as shown in Fig. 2, the clutch 40 is arranged on the intermediate shaft 35.

The clutch 40 comprises the movable component and the fixed component. In this context, "movable component" means a component that is movable in the axial direction of the intermediate shaft 35, and "fixed component" means a component that is not movable in the axial direction of the intermediate shaft 35. That is, the "movable" and "fixed" components herein are respectively movable and fixed with respect to the axial direction. The fixed component is itself configured to be rotatable around the intermediate shaft 35.

In an exemplary embodiment, the clutch 40 is designed as a tooth clutch. As shown in Figs. 3A and 3B, the fixed component is the engagement gear 41, fixed to the intermediate first gear 32. The intermediate first gear 32 is connected to the intermediate shaft 35 via a needle roller bearing 35a shown in Fig. 2. The movable component is the gear sleeve 42, the gear sleeve 42 being fitted round a gear hub 43, and the gear hub 43 being fixed to the intermediate shaft 35 by spline-fitting for example. As can be seen from Fig. 3B, the gear sleeve 42 is provided with internal splines, and the gear hub 43 is provided with external splines fitting the internal splines; thus, the gear sleeve 42 can move in the axial direction relative to the gear hub 43 under an axial pushing force of a shift fork 12, so that the internal splines of the gear sleeve 42 partially engage with the engagement gear 41 fixed to the intermediate first gear 32 while remaining fitted to the external splines of the gear hub 43. In this engaged state, a driving force/torque of the intermediate first gear 32, which comes from the electric motor 20, can be transmitted to the intermediate second gear 33 via the intermediate shaft 35, and then transmitted to the differential 50 and the wheels connected thereto. Conversely, when the gear sleeve 42 is disengaged from the engagement gear 41, transmission of driving force/torque is disconnected; even if the wheels still drive the auxiliary drive differential to operate, the rotation of the wheels drives as little of the transmission mechanism as possible, so drag loss is reduced.

Fig. 4A shows a 3D schematic drawing of the disconnection mechanism 10 according to the present invention. Fig. 4B shows another 3D schematic drawing of the disconnection mechanism 10 according to the present invention.

The disconnection mechanism 10 is used for engaging or disengaging the movable component and the fixed component arranged on the first shaft. The movable component and fixed component are for example the gear sleeve 42 and the engagement gear 41 respectively, but could also be components of a clutch of another type. The first shaft is for example the speed reducer input shaft 34 or the intermediate shaft 35, and extends in a first direction X.

The disconnection mechanism 10 comprises: the shift fork 12, connected to the gear sleeve 42 in Fig. 2, the shift fork 12 being constructed to be able to reciprocate linearly in the first direction X, so that the gear sleeve 42 engages with or disengages from the engagement gear 41; an actuator 13, comprising an output end 13a, the output end rotating about a rotation axis A of the actuator 13 at a distance from the rotation axis A, wherein the rotation axis A is shown more clearly by a dotted line in Fig. 4B; and a drive rod 14, having a first end 14a rotatably connected to the output end 13a and a second end 14b rotatably connected to the shift fork 12, so that the output end 13a, when rotating, can drive the shift fork 12 to reciprocate linearly.

In the exemplary embodiments shown in Figs. 4A and 4B, the output end 13a comprises an output shaft, and the first end 14a of the drive rod 14 comprises an opening fitted round the output shaft. Rotational connection of the output end to the drive rod can thus be achieved in a simple and convenient way. In addition, the axial direction of the output shaft is configured to be a second direction y perpendicular to the first direction X, and the output shaft is offset relative to a shift fork rod 11 in a third direction Z orthogonal to X and Y, the shift fork rod extending in the first direction X, and the drive rod 14 is thus able to be installed between the output shaft and the shift fork 12.

In some exemplary embodiments, other designs of the output end 13a and the first end 14a may also be envisaged. For example, the first end 14a may be configured as a ball joint, and the output end 13a may be configured as a support accommodating the ball joint.

Here, the disconnection mechanism 10 comprises the shift fork rod 11 extending in the first direction, the shift fork 12 being supported on a fixed structure by means of the shift fork rod 11. It can thus be ensured, simply and effectively, that the shift fork 12 reciprocates linearly in the first direction X.

In this context, "fixed structure" means a structure that is fixed in the axial and tangential directions of the first shaft, in particular a structure that is fixed in the axial, radial and tangential directions of the first shaft. In an exemplary embodiment, the disconnection mechanism is arranged in a housing 60, and the fixed structure is part of the housing 60, or a component fixed to the housing 60. The housing 60 may be a housing of the speed reducer 30 or a housing of the electric motor 20, or a housing shared by the speed reducer 30 and the electric motor 20.

Within the scope of the present invention, it may also be envisaged that the shift fork 12 itself has a portion for being supported on the fixed structure, i.e. the shift fork rod 11 may be formed integrally with the shift fork 12.

In the exemplary embodiments shown in Figs. 4A and 4B, the shift fork 12 has a sleeve part 12a fitted round the shift fork rod 11, and a drive rod mounting part 12b extending outwards from the sleeve part 12a.

In this exemplary embodiment, the drive rod mounting part 12b comprises two arms, so as to accommodate the second end 14b of the drive rod between the two arms, and the two arms are rotatably connected to the second end 14b of the drive rod via a pin 12c. Furthermore, the shift fork 12 has two shift fork arms 12d which are able to clasp an outer ring of the gear sleeve 42 of the clutch 40 radially, so that the gear sleeve 42 can reciprocate linearly in the first direction X.

In this exemplary embodiment, the shift fork 12 is supported on the shift fork rod 11 in such a way as to be slideable in the first direction X by means of the sleeve part 12a, and the shift fork rod 11 is fixedly connected to the fixed structure. Here, a bush 15 for reducing sliding friction is provided between the sleeve part 12a of the shift fork 12 and the shift fork rod 11. This design enables the shift fork to be slideably supported on the shift fork rod simply and conveniently at a low cost, so that the shift fork can reciprocate linearly in the first direction X.

In some exemplary embodiments, the shift fork 12 may be fixedly connected to the shift fork rod 11 by means of the sleeve part 12a, and the shift fork rod 11 may be supported on the fixed structure in such a way as to be slideable in the first direction.

In some exemplary embodiments, the second end 14b of the drive rod may also be provided with a ball joint, and the drive rod mounting part 12b may be provided with a recess for receiving the ball joint. In this design, the ball joint may be installed in the recess by a heat shrinking method.

In an exemplary embodiment, the disconnection mechanism 10 further comprises a first position sensor for judging whether the output end has rotated into position, and/or a second position sensor for judging whether the shift fork has moved into position, wherein the first position sensor is arranged inside the actuator 13.

The shape of the drive rod 14 may be adapted to the relative positions of the drive rod mounting part 12b of the shift fork 12 and the output end 13a. The drive rod 14 shown here has a middle bent part, such that the first end and second end of the drive rod lie on different planes. Consequently, the first end 14a of the drive rod 14 is suitably close to a point of connection to the output shaft of the actuator 13, resulting in a smaller cantilever, which is better for supporting the drive rod 14. Depending on the specific application conditions, the drive rod 14 could also have a linear shape.

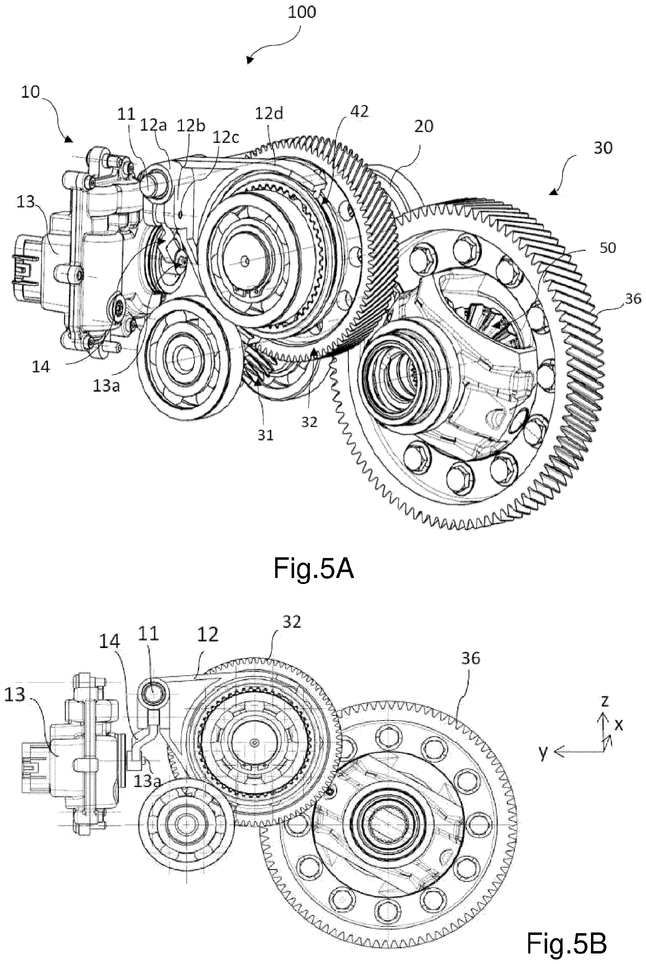

Fig. 5A is a 3D schematic drawing showing how the disconnection mechanism 10 of the present invention and the various components of the power transmission system 100 are related to one another when assembled. Fig. 5B is another 3D schematic drawing showing how the disconnection mechanism 10 of the present invention and the various components of the power transmission system 100 are related to one another when assembled.

As can be seen from Figs. 5A and 5B, the shift fork arms 12d of the shift fork 12 clasp the outer ring of the gear sleeve 42 of the tooth clutch radially, and the shift fork rod 11 is fixedly connected to the housing 60 (see Fig. 1). The entire actuator 13 is arranged at one side of the intermediate shaft 35 of the speed reducer 30, rather than being arranged in the axial direction, thereby reducing the axial length of the power transmission system 100 in the first direction x in comparison with a conventional ball screw solution that needs to be arranged in the axial direction, and can thus save space and increase freedom of design.

In the application scenario shown in Figs. 1 to 5, the disconnection mechanism 10 of the present invention is installed at the left side of the intermediate first gear 32 and used for disconnecting the intermediate first gear 32, more specifically, for disconnecting the intermediate first gear 32 by means of the tooth clutch 40. It should also be pointed out that other application scenarios are also possible for the disconnection mechanism 10 of the present invention.

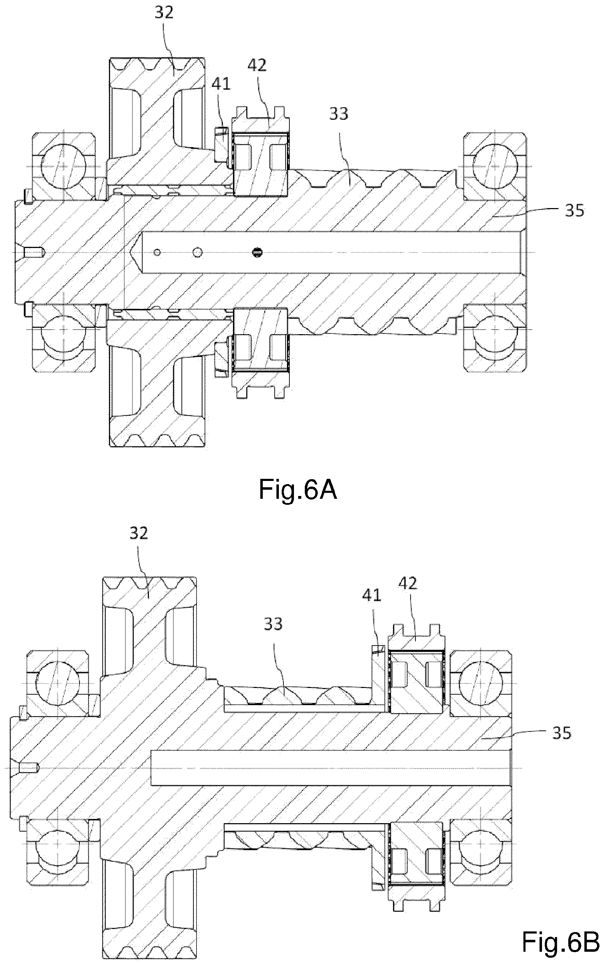

Fig. 6A shows schematically another application scenario of the disconnection mechanism 10 according to the present invention, wherein the tooth clutch 40 (comprising the engagement gear 41 and the gear sleeve 42) is installed on the intermediate shaft 35 at the right side of the intermediate first gear 32, and located between the intermediate first gear 32 and the intermediate second gear 33, and is used for disconnecting the intermediate first gear 32. Thus, the disconnection mechanism 10 is able to disconnect the intermediate first gear 32 by means of the tooth clutch 40 at the side of the intermediate first gear 32 which is opposite to that shown in Figs. 1 to 5.

Fig. 6B shows schematically another application scenario of the disconnection mechanism 10 according to the present invention, wherein the tooth clutch 40 (comprising the engagement gear 41 and the gear sleeve 42) is installed on the intermediate shaft 35 at the right side of the intermediate second gear 33, and used for disconnecting the intermediate second gear 33. Thus, the disconnection mechanism 10 is able to disconnect the intermediate second gear 33 by means of the tooth clutch 40.

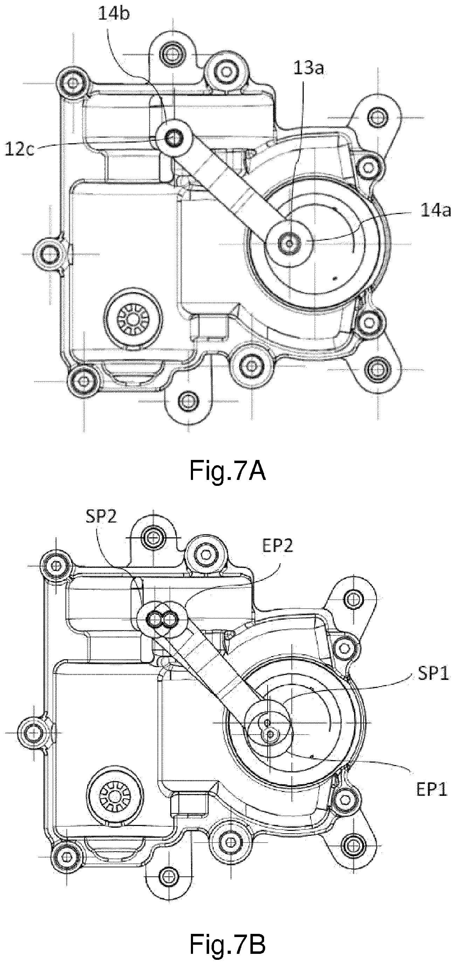

Fig. 7A shows schematically the connection relationships between the drive rod 14 and the actuator 13, and between the drive rod and the shift fork 12. For clarity, the shift fork rod 11 and the drive rod mounting part 12b of the shift fork 12 are omitted. Fig. 7B shows schematically starting positions and end positions of the drive rod in Fig. 7A in an operational state.

As shown in Fig. 7A, the first end 14a of the drive rod 14 is rotatably connected to the output end 13a, and the second end 14b is rotatably connected to the shift fork 12 by means of the pin 12c. As a result of configuring the first end 14a and second end 14b of the drive rod 14 to be rotatably connected, the output end 13a, when rotating, can drive the shift fork to reciprocate linearly. Specifically, referring to Fig. 7B, when the first end 14a of the drive rod 14 rotates anticlockwise from a first starting position SP1 to a first end position EP1 about the rotation axis A, the second end 14b of the drive rod 14 moves rightwards from a second starting position SP2 to a second end position EP2, wherein the second starting position SP2 in this case corresponds to a state in which the gear sleeve 42 is disengaged from the engagement gear 41, and the second end position EP2 in this case corresponds to a state in which the gear sleeve 42 is engaged with the engagement gear 41.

As can be seen, an operating mode of an actuator motor in the present invention is also different from the prior art. In the case of a conventional ball screw, an actuator motor rotates continuously, and the ball screw converts multiple revolutions to axial linear movement of the shift fork, whereas according to the solution of the present invention, the actuator motor need only rotate through a very small angle in order to realize linear movement of the shift fork. Thus, the present invention not only reduces the axial length of the power transmission system as a whole, thus saving space, but also has a fast operational response and high operating efficiency.

Furthermore, the solution of the disconnection mechanism of the present invention also has a cost advantage, because the drive rod is a machined member, which has a lower cost than a ball screw. As long as the drive rod is configured to have positional precision and dimensions fitting the output shaft and the pin, the object of the present invention can be achieved.

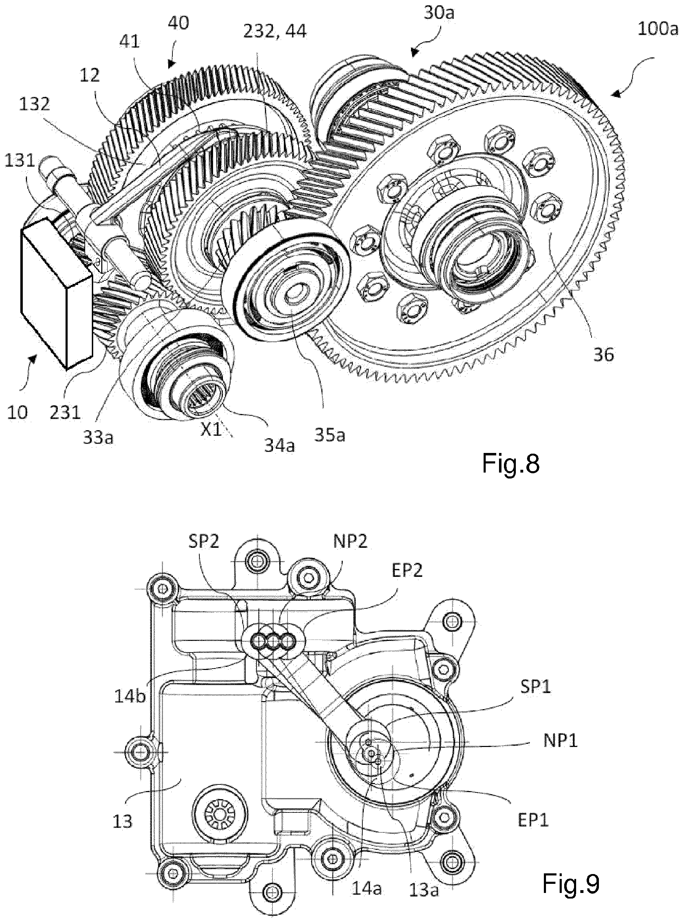

Fig. 8 shows a 3D schematic drawing of a second embodiment of a power transmission system 100a for a vehicle according to the present invention. The power transmission system 100a comprises:
- a twin speed reducer 30a, having at least one transmission shaft, for example a speed reducer input shaft 34a and an intermediate shaft 35a;
- a clutch 40, comprising two fixed component and a movable component arranged on a first shaft, wherein the first shaft comprises the at least one transmission shaft, the two fixed components are for example a first engagement gear 41 and a second engagement gear 44, and the movable component is for example a gear sleeve 42 which is axially movable between the two fixed components; and
- a disconnection mechanism 10 (schematically represented), for engaging or disengaging the movable component and the fixed components.

The movable component 42 is axially movable between the two fixed components 41, 44.

The twin speed reducer 30a comprises an intermediate shaft 35a, which may be connected to an input shaft 34a and another driven gear 36 connected to the differential, so that a speed-reduced driving force is distributed between different wheels by the differential. The twin speed reducer 30a comprises a first stage of speed reducing between the input shaft 34a and the intermediate shaft 35a. The twin speed reducer also comprises a second stage of speed reducing between the intermediate gear 33a of the intermediate shaft 35a and the driven gear 36.

The first stage of speed reducing comprises two speed ratios:
- on the one hand, the first speed ratio comprises a first input gear 131 integral in rotation with the input shaft 34a relative to the axis of rotation X1 and a first driven gear 132 meshing with the first input gear 131 and configured to be rotatable around the intermediate shaft 35a; and
- on the other hand, the second speed ratio comprises a second input gear 231 integral in rotation with the input shaft 34a relative to the axis of rotation X1 and a second driven gear 232 meshing with the second input gear 231 and configured to be rotatable around the intermediate shaft 35a.

The clutch 40 is used to providing interruptible transmission of driving torque between the electric motor 20 and the differential 50 and is also used to selecting the speed ratio. In this second embodiment, the clutch 40 is arranged on the intermediate shaft 35a.

The first driven gear 132 is fixed to a first engagement gear 41 and the second driven gear 232 is fixed to a second engagement gear 44.

Fig. 9 shows schematically the connection relationships between the drive rod 14 and the actuator 13, and between the drive rod and the shift fork when the disconnection mechanism is integrated within a twin speed reducer. For clarity, the shift fork rod and the drive rod mounting part of the shift fork 12 are omitted. Fig. 9 shows schematically starting positions, neutral positions and end positions of the drive rod in an operational state.

As shown in Fig. 9, the first end 14a of the drive rod 14 is rotatably connected to the output end 13a, and the second end 14b is rotatably connected to the shift fork 12 by means of a pin. As a result of configuring the first end 14a and second end 14b of the drive rod 14 to be rotatably connected, the output end 13a, when rotating, can drive the shift fork to reciprocate linearly. Specifically, when the first end 14a of the drive rod 14 rotates anticlockwise from a first starting position SP1 to a first end position EP1 about the rotation axis A, the second end 14b of the drive rod 14 moves rightwards from a second starting position SP2 to a second end position EP2 wherein the second starting position SP2 in this case corresponds to a state in which the gear sleeve 42 is engaged with the first engagement gear 41, and the second end position EP2 in this case corresponds to a state in which the gear sleeve 42 is engaged with the second engagement gear 44.

In this second embodiment, the drive rod 14 can reach a neutral position corresponding to a disengaged position for the twin speed reducer. In this neutral position, the disconnection mechanism causing the movable component and the fixed component to be disengaged, to disconnect torque transmission in the twin speed reducer.

When the first end 14a of the drive rod 14 reaches a first neutral position NP1 located between the first starting position SP1 and the first end position EP1, the second end 14b of the drive rod 14 reaches a second neutral position NP2. Is this neutral position, the gear sleeve 42 is disengaged from any engagement gear 41, 44.

Although exemplary embodiments are described in the foregoing description, it should be noted that a large number of variants are possible. In addition, it should be noted that the exemplary embodiments are merely examples and should not be considered as any form of limitation on the scope of protection, applicability, and device construction according to the exemplary embodiments. More precisely, the summary and the description of embodiments are to provide professionals with guidance for implementing at least one exemplary embodiment, wherein various modifications can be made in terms of the function and layout of the assembly, as long as they do not deviate from the scope of protection determined by the claims and equivalent feature combinations.

## Claims

1. A disconnection mechanism (10), for engaging or disengaging a fixed component and a movable component arranged on a first shaft extending in a first direction (x), wherein the disconnection mechanism (10) comprises:
a shift fork (12), connected to the movable component, the shift fork being constructed to be able to reciprocate linearly in the first direction (x), so that the movable component is engaged with or disengaged from the fixed component;
an actuator (13), comprising an output end (13a), the output end rotating about a rotation axis (A) of the actuator at a distance from the rotation axis; and
a drive rod (14), having a first end (14a) rotatably connected to the output end (13a) and a second end (14b) rotatably connected to the shift fork (12), so that the output end, when rotating, is able to drive the shift fork to reciprocate linearly.

2. The disconnection mechanism (10) according to Claim 1, the output end (13a) comprising an output shaft, and the first end (14a) of the drive rod (14) comprising an opening fitted round the output shaft.

3. The disconnection mechanism (10) according to Claim 1 or 2, the disconnection mechanism (10) comprising a shift fork rod (11) extending in the first direction, and the shift fork (12) being supported on a fixed structure by means of the shift fork rod (11).

4. The disconnection mechanism (10) according to Claim 3, the shift fork (12) having a sleeve part (12a) fitted round the shift fork rod (11) and a drive rod mounting part (12b) extending outwards from the sleeve part (12a), the drive rod mounting part being rotatably connected to the second end (14b) of the drive rod.

5. The disconnection mechanism (10) according to Claim 4, the drive rod mounting part (12b) comprising at least one arm (12d), which is rotatably connected to the second end (14b) of the drive rod by means of a mounting member (12c).

6. The disconnection mechanism (10) according to Claim 5, the drive rod mounting part (12b) comprising two arms (12d), so as to accommodate the second end (14b) of the drive rod between the two arms.

7. The disconnection mechanism (10) according to Claim 5, the mounting member being a pin (12c).

8. The disconnection mechanism (10) according to Claim 4, the second end (14b) of the drive rod being provided with a ball joint, and the drive rod mounting part (12b) comprising a recess for receiving the ball joint.

9. The disconnection mechanism (10) according to any one of Claims 4 to 8, the shift fork (12) being fixedly connected to the shift fork rod (11) by means of the sleeve part (12a), and the shift fork rod being supported on the fixed structure in such a way as to be slideable in the first direction.

10. The disconnection mechanism (10) according to any one of Claims 4 to 8, the shift fork (12) being supported on the shift fork rod (11) in such a way as to be slideable in the first direction by means of the sleeve part (12a), and the shift fork rod being fixedly connected to the fixed structure.

11. The disconnection mechanism (10) according to Claim 10, a bush (15) being provided between the sleeve part (12a) of the shift fork (12) and the shift fork rod (11).

12. The disconnection mechanism (10) according to any one of the preceding Claims, the disconnection mechanism being arranged in a housing (60), and the fixed structure being part of the housing or a component fixed to the housing.

13. The disconnection mechanism (10) according to any one of the preceding Claims, the disconnection mechanism (10) further comprising a first position sensor for judging whether the output end has rotated into position, and/or a second position sensor for judging whether the shift fork has moved into position, wherein the first position sensor is arranged inside the actuator (13).

14. A power transmission system (100) for a vehicle, comprising:
a speed reducer (30), having at least one transmission shaft which receives torque from a driving mechanism;
a tooth clutch (40), comprising a fixed component and a movable component arranged on a first shaft, the first shaft being at least one transmission shaft; and
the disconnection mechanism (10) according to one of Claims 1 to 13, the disconnection mechanism causing the movable component and the fixed component to be engaged or disengaged, to receive or disconnect torque transmission of the driving mechanism and the speed reducer (30).

15. A power transmission system (100a) for a vehicle is provided, comprising:
a twin speed reducer (30a), having at least one transmission shaft which receives torque from a driving mechanism;
a tooth clutch (40), comprising two fixed component and a movable component arranged on a first shaft, the first shaft being at least one transmission shaft and the movable component is axially movable between the two fixed components;
and the disconnection mechanism (10) according to one of Claims 1 to 13, the disconnection mechanism causing the movable component and the two fixed components to be engaged or disengaged separately, to receive or disconnect torque transmission of the driving mechanism and the twin speed reducer (30a).
